# EUROPEAN PATENT APPLICATION

(11) **EP 4 303 363 A1**
(43) Date of publication of application: **10.01.2024**
(21) Application number: 22762670.2
(22) Date of filing: 04.03.2022
(51) Int. Cl.: E01C 7/30, C08L 93/04

(54) **BINDING AGENT DERIVED FROM NATURAL AND RENEWABLE SOURCES FOR THE CONSTRUCTION INDUSTRY, WATERPROOFING AND SOUNDPROOFING AND METHOD FOR PREPARING AND USING SAME**

(30) Priority: 05.03.2021 ES 202130197
(71) Applicant: Engiquia, S.L., 43007 Tarragona (ES)
(72) Inventor: SERRA QUERALT, Marc, 43007 TARRAGONA (ES)
(74) Representative: ZBM Patents - Zea, Barlocci & Markvardsen
(86) International application number: PCT/ES2022/070125
(87) International publication number: WO 2022/184966

(57) **Abstract**

The present invention relates to the production of binders derived from natural and renewable sources which show binding properties and are thermoplastic. The present invention also relates to the application thereof as a binder in the construction sector such as in pavements, coatings, and waterproofing, or as a precursor for preparing emulsions.

## Description

This patent application claims the priority of Spanish patent application P202130197 filed on March 5, 2021.

The present invention relates to binders derived from natural and renewable sources which have binding properties and are thermoplastic. It also relates to a method for preparing same and to the use thereof as final binders or precursors in the field of construction.

### STATE OF THE ART

The most commonly used thermoplastic binders with binding properties are natural or artificial bitumens, tars, and products derived therefrom such as fluxed bitumens, oxidized bitumens, bitumen emulsions, and polymer-modified bitumens.

Bitumens obtained from petroleum are the most common and widely used due to their lower thermal susceptibility compared to tars. Petroleum-derived bitumens are usually classified by the range of relative consistency or hardness, measuring the distance a standard needle vertically penetrates a bitumen sample under specified conditions of temperature, load, and time (penetration test). In that sense, conventional penetration-grade bitumens are classified into grades according to their hardness or consistency by means of this penetration test. There is also a classification for polymer-modified penetration-grade bitumens by means of penetration and the minimum value of their softening point. The softening value is related to the thermal susceptibility of the binder, ultimately, it will relate to whether the binder will maintain a certain consistency at temperatures of use so that the pavement will not deform when it has to support the loads generated by traffic.

The most commonly used petroleum-derived bitumens in paving usually comprise penetration values in the following ranges in conventional paving: 15/25, 35/50, 50/70, using the lower penetration ranges when greater stability is to be obtained.

Asphalt or petroleum-derived bitumens most widely used in the waterproofing industry are 15/25, 35/50, 50/70, 70/100, 100/150, 160/220, 250/330.

High penetration values from 70/100, 100/150, 160/220 can be used as precursors for preparing water-bitumen emulsions, although bitumens with lower penetration or harder bitumens such as 15/25, 35/50, 50/70 are increasingly used, as the so-called thermoadherent emulsions are obtained, the processes for preparing emulsions are widely known and described. The great importance of penetration-grade bitumens is the use thereof mainly in the world of construction, such as the formation of pavements (commonly referred to as asphalts), coatings, gaskets, putties, primer/tack coats and soundproofing products, waterproofing products, oxidized bitumen, asphalt sheets, but they are also used in other sectors such as waterproofing and soundproofing in the automotive industry, footwear industry, etc.

Of all the foregoing, bituminous mixtures used for paving are the most important by volume and are mainly used for paving paths, streets, roads, freeways, airports, squares, parking areas, sports areas, and parks. Said bituminous mixtures or asphalts are produced by means of a combination of stone materials, aggregates, and a bituminous binder, that is pure or emulsified, and in some cases also complemented with the addition of different products such as: polymers or copolymers such as: styrene-butadiene-styrene (SBS), ethylene vinyl acetate (EVA), polyethylene (PE), recycled materials such as rubber obtained from tire shredding, synthetic or natural waxes, synthetic or natural fibers, pigments, adhesion promoters, to improve the performance of said mixtures.

The production process of bituminous mixtures is widely described and there are several classifications for the different types of bituminous mixtures used.

Thermoplastic binders with binding properties are usually hydrocarbon binders, ultimately, viscous bituminous products prepared from fossil hydrocarbons or synthetic binders, mostly petroleum-derived resins, which due to their tonality can be easily pigmented.

There are numerous works in which artificial and natural resins are used. In patent ES2079265, coumarone-indene resins and rosin resins are used, but in order to produce the binder, they must be mixed with high distillation point oils such as mineral oils from petroleum refining, a mixture of UV light stabilizers, antioxidants, and a thermoplastic polymer or mixture of thermoplastic polymers, whereby said binder still has a high proportion of petroleum-derived products. As described in this patent, if the petroleum or coumarone-indene resins are dispensed with, the final binders will have serious deficiencies in their ductility.

Patent ES2274732 uses a mixture of natural resins extracted from pine tree, a dispersing substance such as a mineral oil from petroleum refining, and a recycled thermoplastic polymer. This patent mentions that the resins provide the properties of cohesiveness and consistency, the dispersing medium facilitates the dispersion of the mixtures, and the thermoplastic polymer provides the properties of elasticity and load resistance.

Patent applications US20110015312 and US20120129985 use natural resins of different origins, among them rosin and derivatives, however, in order to produce the binders, vegetable oils must be added in both cases, and to counteract the decrease in properties generated in the final product as a result of the addition of oil, it is necessary to add polymers functionalized with functional groups such as carboxylic acid anhydride, carboxylic acid, epoxide groups, or silane groups.

The use of polymers to improve thermal susceptibility is widely known in the world of bituminous binders: it improves the softening point of the binder at high temperatures and improves its Fraass brittle point at low temperatures. In that sense, conventional bitumen can be modified by means of adding, at high temperature and under stirring, small proportions of elastomers such as styrene-butadiene-styrene (SBS), or thermoplastics such as ethylene vinyl acetate (EVA), polyethylene (PE), generating the well-known commercial polymer-modified bitumens PMB, such as PMB 10/40-70, PMB 25/55-65, PMB 45/80-60, PMB 45/80-65, PMB 45/80-75, PM B 75/130-60.

Patent application US20040260057 describes a binder formed by means of a resin and a vegetable oil. In this case, to enable obtaining a binder with behavior similar to penetration-grade bitumen and not having to add thermoplastic polymers or elastomers, it is necessary to use starting resins with a softening point of at least 100°C to counteract the steep decrease in the softening point when a vegetable oil is added.

According to all current patents, these natural resins have to be dispersed in a vegetable oil and/or petroleum derivative, in any case due to the non-resinous nature of this second oily component, it requires the use of resins with a high initial softening point and/or the addition of virgin or recycled polymers that improve the behavior of the final binder and can thereby show the right performance in paving, waterproofing, generally for the construction sector.

This means that most of these binders still involve the use of derivatives from fossil resources such as petroleum, or limit the initial starting resin to be used, since the use of oils implies a decrease in the final properties of the final binder.

Due to the need to reduce the use of and dependence on fossil resources, to provide sustainability criteria in the construction sector, and to enable applying suitable products in construction projects in environmentally protected environments, there is a real need to provide binders derived from natural and renewable sources that show suitable properties in a wide range of uses and allow replacing products derived from fossil resources.

### DESCRIPTION OF THE INVENTION

The inventor of the present invention has found that it is possible to obtain sustainable binders that have penetration ranges similar to the common ranges used in penetration-grade bitumens and are formulated only with resin derivatives of natural origin, such as conifer resins, and particularly rosin resins, and derivatives such as rosin esters, showing optimal results and values when used as binders simulating the hot bituminous mixtures used in paving. The binders of the invention therefore prevent the use of resins derived from fossil resources, the addition of polymers, and/or the need to use starting resins with a high softening point.

By means of the present invention, sustainable binders can be obtained and they show the right performance to be used in hot paving, and therefore in other construction applications which are based on the same principle, such as, for example, waterproofing, gaskets, putties, coatings, or as precursors in emulsions, ultimately, as direct binders or precursors applicable in the construction, waterproofing, and soundproofing sector in general.

The inventor has found that this wide range of penetration values similar to commercial petroleum bitumens can be obtained by combining a proportion of conifer resin ester, particularly rosin resin ester, the physical state of which at room temperature is liquid, with a proportion of natural or conifer-derived resin, particularly a rosin resin ester which exhibits a solid physical state at room temperature.

Since the competition between the proportion of said solid products and the proportion of said liquid products is what allows obtaining a final binder with higher or lower penetration ranges, the desired degree or range of penetration can be obtained in a controlled manner by simply regulating the proportion between these products with different physical states. This facilitates the industrial production and grading of different binders depending on the products used.

These binders exhibit a right behavior simulating a conventional bituminous mixture for application in paving, and this has been shown by results in aggregate-binder specimens. This has been deduced by comparing the stability and water sensitivity values obtained for the binders of the invention and commercial petroleum bitumens having similar range of penetration.

As a result of their hot fluidity, the binders of the invention are workable and penetrate deeply, and when mixed with aggregates, they allow coating the surface of the aggregates with ease and binding them together. They are also water immiscible, which provides waterproofing properties. Furthermore, they are sufficiently consistent once cooled, so if used for the formation of a pavement, they provide sufficient stability throughout the entire spectrum of working temperatures thereof so as to withstand the continuous action of loads caused by traffic, such that the pavement does not exhibit creep or deformation phenomena, which will allow preparing pavements that show proper resistance to fatigue, flexibility of the layers, slip resistance, and durability.

As explained in more detail below, the main component of conifer resins in general, and of rosin in particular, are resin acids which are present in a proportion of around 90-95%. The high chemical activity thereof lies in this molecule, which has two centers of chemical activity: the double bonds and the carboxyl group.

In that sense, one aspect of the invention relates to a binder for the construction, waterproofing, and soundproofing sector, characterized in that it comprises:
a) one or more conifer resins comprising one or more resin acid esters, having individually or after being mixed, a viscous liquid state at 25°C and 1013 hPa, or alternatively, one or more resin acid esters of conifer resin, having individually or after being mixed, a viscous liquid state at 25°C and 1013 hPa; and
b) one or more conifer resins, having individually or after being mixed, a solid state at 25°C and 1013 hPa, or alternatively, one or more conifer resin components, having individually or after being mixed, a solid state at 25°C and 1013 hPa.

When it is indicated in the present invention that one or more conifer resins have, individually or after being mixed, a specific physical state at 25°C and 1013 hPa, it means that when only one resin is used, said resin exhibits that physical state, and when two or more resins are used, it is the mixture of the resins which exhibits that physical state without taking into account the physical state of each of the resins individually in a separate manner. The same applies to the conifer resin components in general and to the resin acid esters of conifer resin in particular. Conifer resin components are understood to mean those components which are present in a conifer resin, but which may have been prepared synthetically instead of being isolated from a resin.

Natural resins are complex and diverse mixtures generally encompassing a volatile fraction and another non-volatile fraction. It is considered that the volatile fraction is composed of hydrocarbon monoterpenes and/or sesquiterpenes, with an oxygenated functional group, the non-volatile fraction is composed of acidic diterpenes, triterpenes with the presence of alcohols, aldehydes, or esters of these acids. The proportion between volatile and non-volatile fractions varies depending on which species has been extracted, and this proportion will determine the fluidity, viscosity, and susceptibility to polymerization.

Resinous plants are conifers, and of these plants the *Pinaceae* and *Araucariaceae* families stand out because resin can be extracted more abundantly therefrom. The diterpenes present in conifers are characterized by three main types: abietane, pimarane, and labdane and their abundance will vary depending on the conifer family.

The resin obtained from conifers of the genus *Pinus* is rich in abietanes. Rosin (CAS 8050-09-7) can be extracted and obtained from same. Depending on the source from which it is obtained, rosin is divided into three types: gum rosin (GR), which is obtained by distillation with steam entrainment of the resin obtained by cutting the bark of conifers; wood rosin (WR), which is extracted from pine stumps or wood sawmill waste by treatment with organic solvents; and tall oil rosin (TOR), which is obtained from the by-products of paper pulp production.

Conifer resins in general and rosin resins in particular are made up of a mixture of diterpenoid resin acid isomers. There are more than 20 different isomeric structures of resin acids, most of which have the general formula C₁₉h₂₉COOH. The predominant acid is abietic acid. Other acids present in rosin include neoabietic acid, dehydroabietic acid, dihydroabietic acid, pimaric acid, levopimaric acid, isopimaric acid, sandopimaric acid, and palustric acid. The chemical structures of these acids and their corresponding accession numbers are shown in the following table:

| | | |
|---|---|---|
| 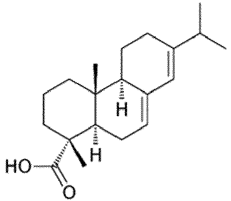 | 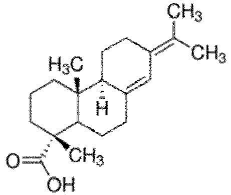 | 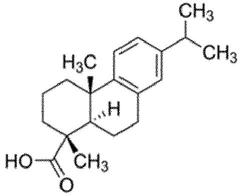 |
| abietic acid (CAS 514-10-3) | neoabietic acid (CAS 471-77-2) | dehydroabietic acid (CAS 1740-19-8) |
| 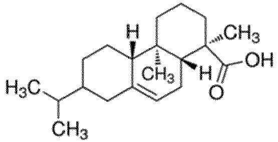 | 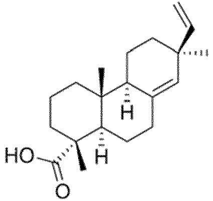 | 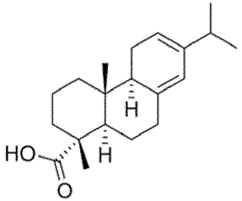 |
| dihydroabietic acid (CAS 34434-80-5) | pimaric acid (CAS 127-27-5) | levopimaric acid (CAS 79-54-9) |
| 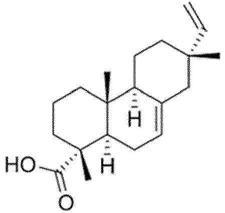 | 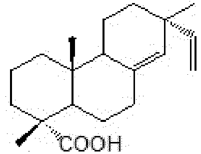 | 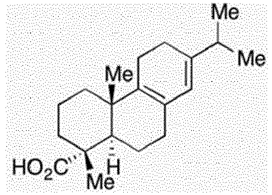 |
| isopimaric acid (CAS 5835-26-7) | sandopimaric acid | palustric acid (CAS 1945-53-5) |

The total acid content in rosin is typically 90 to 95% by weight, depending on the source of the rosin and the process used for obtaining same. The remaining components are commonly referred to as "neutral" or "non-saponifiable" components as they do not have carboxylic acid functionality. Generally, this part includes diterpene hydrocarbons, alcohols, esters, or aldehydes. The neutral fraction is typically less than 10% by weight of the rosin.

Conifer resins, and particularly rosin resins and their derivatives, are mainly mixtures of large and complex molecules, which gives rise to their amorphous structure, and for this reason they do not usually have a clearly defined melting point, rather said transformation occurs in a temperature interval or range, therefore the substance gradually softens when it is heated, increasing its tendency to deform, whereby in those cases it is usually called the softening point, which can be defined as the temperature at which the substance transitions from a glassy or rigid solid state to a semi-solid state, without establishing a completely liquid phase. Melting or softening point measurement methods such as, for example, the ring and ball method are well known to one skilled in the art.

In one embodiment of the invention, optionally in combination with one or more features of the various embodiments described above or below, the resins having a viscous liquid state at 25°C and 1013 hPa, also referred to herein simply as viscous liquid state, have a softening or melting point below 25°C.

In one embodiment of the invention, optionally in combination with one or more features of the various embodiments described above or below, the resins having a solid state a 25°C and 1013 hPa, also referred to herein simply as solid state, have a softening or melting point equal to or greater than 50°C at 1013 hPa, more particularly a softening or melting point equal to or greater than 60°C at 1013 hPa.

As previously mentioned, the binder of the invention is based on a mixture of resins or components thereof.

In one embodiment of the invention, optionally in combination with one or more features of the various embodiments described above or below, the invention relates to a binder for the construction, waterproofing, and soundproofing sector, characterized in that it comprises:
a') one or more conifer resins comprising one or more resin acid esters, having individually or after being mixed, a viscous liquid state at 25°C and 1013 hPa; and
b") one or more conifer resin components, having individually or after being mixed, a solid state at 25°C and 1013 hPa.

In another embodiment of the invention, optionally in combination with one or more features of the various embodiments described above or below, the invention relates to a binder for the construction, waterproofing, and soundproofing sector, characterized in that it comprises:
a") one or more resin acid esters of conifer resin, having individually or after being mixed, a viscous liquid state at 25°C and 1013 hPa; and
b') one or more conifer resins, having individually or after being mixed, a solid state at 25°C and 1013 hPa.

In another embodiment of the invention, optionally in combination with one or more features of the various embodiments described above or below, the invention relates to a binder for the construction, waterproofing, and soundproofing sector, characterized in that it comprises:
a") one or more resin acid esters of conifer resin, having individually or after being mixed, a viscous liquid state at 25°C and 1013 hPa; and
b") one or more conifer resin components, having individually or after being mixed, a solid state at 25°C and 1013 hPa.

In another embodiment of the invention, optionally in combination with one or more features of the various embodiments described above or below, the invention relates to a binder for the construction, waterproofing, and soundproofing sector, characterized in that it comprises:
a') one or more conifer resins comprising one or more resin acid esters, having individually or after being mixed, a viscous liquid state at 25°C and 1013 hPa; and
b') one or more conifer resins, having individually or after being mixed, a solid state at 25°C and 1013 hPa.

In another embodiment of the invention, optionally in combination with one or more features of the various embodiments described above or below, the conifer resins b) or b') comprise one or more resin acid esters.

In another embodiment of the invention, optionally in combination with one or more features of the various embodiments described above or below, the components of conifer resins b) or b") are one or more resin acid esters.

In another embodiment of the invention, optionally in combination with one or more features of the various embodiments described above or below, the invention relates to a binder for the construction, waterproofing, and soundproofing sector, characterized in that it comprises:
a1) one or more conifer resins comprising one or more resin acid esters, having individually or after being mixed, a viscous liquid state at 25°C and 1013 hPa; and
b1) one or more conifer resins comprising one or more resin acid esters, having individually or after being mixed, a solid state at 25°C and 1013 hPa.

In another embodiment of the invention, optionally in combination with one or more features of the various embodiments described above or below, the conifer resin is rosin.

The great reactivity of conifer resins in general and of rosin in particular lies in the resin acid molecule, which has two centers of chemical activity: the double bonds and the carboxyl group. Due to said centers of chemical activity, numerous modifications can be achieved in the structure of resin acid, presenting modified rosins and derivatives such as rosin esters.

Commercially, rosin can be found as natural rosin, i.e., not chemically modified, or modified rosin, chemical reactions resulting from the presence of unsaturation in the resin acids present in rosin. In that sense, natural conifer resins, and particularly natural rosin, can undergo chemical reactions such as: polymerization, oxidation, adduct formation by means of Diels-Alder addition, for example, with maleic anhydride or fumaric acid; hydrogenation, dehydrogenation, or disproportionation.

For the purposes of the present invention, the term "conifer resin" in general and "rosin" in particular seeks to encompass the use of all types of resins or rosins mentioned herein, i.e., natural (unmodified) resins or modified resins, i.e., oxidized, polymerized or reinforced (resulting from a Diels-Alder reaction), hydrogenated, dehydrogenated, or disproportionated resins, or a mixture thereof. Any type of resin and particularly any type of rosin can be used to prepare the rosin esters described herein, including gum rosin (GR), wood rosin (WR), tall oil rosin (TOR), and mixtures thereof.

Conifer resins in general, and rosin resins in particular, used in the present invention can be natural resins, modified resins, derivative resins, multiple resins, or mixtures thereof. Conifer resin components used in the present invention can be extracted from conifers or synthesized and can include the same modifications indicated for resins.

In one embodiment of the invention, optionally in combination with one or more features of the various embodiments described above or below, natural rosin resins are selected from the group consisting of gum rosin (GR), wood rosin (WR), tall oil rosin (TOR).

Modified resins are described as those which are obtained (i.e., obtainable) by the reaction of the double bond present in the resin acids making up natural resins and include, for example:
Resins obtainable by isomerization and polymerization reactions, in which the instability to heat and in acid medium of the conjugated double bonds present in abietic-type acids (abietic, neoabietic, levopimaric acids) favor obtaining more stable modified rosins. Industrial polymerized rosin is often obtained by the reaction of these double bonds with alkyl halides, metal halides, or inorganic acids, obtaining heterogeneous dimers of abietic-type acids.

Resins obtainable by oxidation reactions, abietic-type acids with conjugated double bonds readily react with oxygen, leading to rosins with a high softening point or hardened rosins.

Hydrogenated resins, in which the first double bond activated by conjugation in resin acids is readily hydrogenated, a widely known and used process for obtaining rosins that are less susceptible to oxidation.

Disproportionated resins, in which two hydrogen atoms are removed from abietic-type acids that contain two double bonds and the double bond system is rearranged forming an aromatic nucleus, the extracted hydrogen is readily absorbed by other abietic-type acids with two double bonds and dihydroabietic and tetrahydroabietic acids are produced, causing rosin to be more stable against oxidation by atmospheric oxygen.

Reinforced resins are obtainable by means of Diels-Alder addition, for example, with maleic anhydride or fumaric acid.

Derivative resins are described as those obtained or obtainable by the reaction of the carboxyl groups of resin acids of natural resins and include, for example: resins obtainable by salt formation, esterification, hydrogenolysis, and ammonolysis reactions. Metal salts or resinates are obtainable by the reaction of the carboxyl groups of the resin acids of natural resins with suitable inorganic bases such as, for example, alkali or alkaline earth metal hydroxides such as KOH, CaOH₂, NaOH, or ammonium hydroxide, optionally in the presence of a suitable solvent. Esters are obtainable by the reaction of the carboxyl groups of the resin acids of natural resins with alcohols at a suitable temperature. The resins obtainable by ammonolysis in which the action of ammonia at a high temperature produces a rosin nitrile.

Multiple resins are described as those obtainable from natural resins by a method comprising at least one step of reacting the double bond present in the resin acids of the resin, and at least one step of reacting the carboxyl groups of the resin acids of the resin, wherein the steps can take place in any order. Alternatively, multiple resins are obtainable from derivative resins by a method comprising at least one step of reacting the double bond present in the resin acids of the resin. Alternatively, multiple resins are obtainable from modified resins by a method comprising at least one step of reacting the carboxyl groups of the resin acids of the resin.

In a more particular embodiment, the resin acids are selected from the group consisting of abietic acid, neoabietic acid, dehydroabietic acid, dihydroabietic acid, pimaric acid, levopimaric acid, isopimaric acid, sandopimaric acid, and palustric acid.

As mentioned above, in a particular embodiment of the invention, the binder comprises a1) one or more conifer resins comprising one or more resin acid esters having a viscous liquid state and b1) one or more conifer resins comprising one or more resin acid esters having a solid state.

The esterification reaction is carried out by reacting carboxylic acids with an alcohol, by means of a condensation reaction, producing an ester and water. It is a reaction that is usually in equilibrium. The rosin esters used in the invention can be esters with a greater or lesser degree of esterification.

As esterification progresses, the free acid concentration decreases. For the purposes of the invention, the acid number (NA) will indicate the degree of esterification considering that it is a simple reaction without distinguishing between the different esters: formed mono-, di-, triesters. The acid number can be measured as the amount of potassium hydroxide (in mg) to neutralize 1 gram of resin. Generally, the acid numbers of natural or modified rosin can vary from 150 to 185 mg KOH/g resin depending on the type of rosin and the modification made. During the esterification of natural rosin, its acid number value will decrease, and values equal to or less than 10-15 are those considered for a complete esterification.

In one embodiment of the invention, optionally in combination with one or more features of the various embodiments described above or below, the acid number of rosin esters a) and/or b) is equal to or less than 150 mg KOH/g, particularly equal to or less than 120 mg KOH/g.

The rise in environmental awareness generates a growing interest in substituting raw materials of petrochemical origin for others of renewable origin and with less environmental impact. The binder of the invention shows its sustainability and its integration within the circular economy model through the use of natural conifer resins, for example, rosin, which is produced by means of extracting resins from living and specifically forested pine trees, or obtained by exploiting by-products of the paper industry.

Currently many of the alcohols used for esterification can be obtained from biomass, animal and vegetable fats and also obtained from exploiting by-products from the attainment of soaps, polypropylene, biodiesel. In that sense, in one embodiment, optionally in combination with one or more features of the various embodiments described above or below, the invention relates to the binder defined above in the absence of products derived from fossil resources, particularly in the absence of hydrocarbon resins from petroleum, tar, natural bitumen extracted from bituminous rocks.

In another embodiment, optionally in combination with one or more features of the various embodiments described above or below, the invention relates to a binder for the construction, waterproofing, and soundproofing sector, characterized in that it consists of:
a) one or more conifer resins comprising one or more resin acid esters, having individually or after being mixed, a viscous liquid state at 25°C and 1013 hPa, or alternatively, one or more resin acid esters of conifer resin, having individually or after being mixed, a viscous liquid state at 25°C and 1013 hPa; and
b) one or more conifer resins, having individually or after being mixed, a solid state at 25°C and 1013 hPa, or alternatively, one or more conifer resin components, having individually or after being mixed, a solid state at 25°C and 1013 hPa.

In another embodiment of the invention, optionally in combination with one or more features of the various embodiments described above or below, the resin acid esters are alcohol esters selected independently from the group consisting of a (C₁-C₁₂)alcohol and polyethylene glycol.

In another embodiment of the invention, optionally in combination with one or more features of the various embodiments described above or below, the resin acid esters, having individually or after being mixed, a viscous liquid state a 25°C and 1013 hPa are alcohol esters selected independently from the group consisting of a (C₁-C₁₂)alcohol and polyethylene glycol.

In another embodiment of the invention, optionally in combination with one or more features of the various embodiments described above or below, the resin acid esters, having individually or after being mixed, a viscous liquid state a 25°C and 1013 hPa are alcohol esters selected independently from the group consisting of a (C₁-C₁₂)alcohol and polyethylene glycol.

The term "(c₁-C₁₂)alcohol" refers to a saturated linear or branched hydrocarbon chain containing 1 to 12 carbon atoms, in which one or more hydrogen atoms have been substituted by hydroxyl groups. When the alcohol contains 2 or more hydroxyl groups, it is also referred to as polyhydric alcohol.

Examples of alcohols which can be used to prepare resin acid esters, and more particularly rosin esters, include, but are not limited to, monoalcohols such as methanol, ethanol, propanol, butanol, pentanol, neopentyl glycol, or 2-ethylhexanol; diols such as ethylene glycol, diethylene glycol, triethylene glycol, propylene glycol, tetraethylene glycol, trimethylene glycol, 2-ethyl-2-butylpropanediol, polyethylene glycol, or polypropylene glycol, and polyols with more than 2 hydroxyl groups such as glycerol, diglycerol, pentaerythritol, dipentaerythritol, tripentaerythritol, sorbitol, xylitol, mannitol, trimethylolethane, trimethylolpropane, or trimethylolbutane.

In one embodiment of the invention, optionally in combination with one or more features of the various embodiments described above or below, the alcohols of the resin acid esters are independently polyhidric alcohols.

In another embodiment of the invention, optionally in combination with one or more features of the various embodiments described above or below, the alcohols of the resin acid esters having a viscous liquid state are selected from the group consisting of methanol, diethylene glycol, and triethylene glycol.

In another embodiment of the invention, optionally in combination with one or more features of the various embodiments described above or below, the alcohols of the resin acid esters having a solid state are selected from the group consisting of ethylene glycol, glycerin, trimethylolpropane, and pentaerythritol.

The term "resin acid esters", as it is used herein, refers to the products resulting from the esterification reaction of the resin esters of natural, modified, derived, or multiple conifer resin as described above, with alcohols. Resin acid esters include, for example, rosin esters.

The number of esters that can be formed in the esterification reaction with a given alcohol depends on the alcohol used. In that sense, when an alcohol with a single hydroxyl group, such as, for example, methanol, is used, only the formation of monoesters is possible. When polyhydric alcohols with two hydroxyl groups such as, for example, ethylene glycol, diethylene glycol, or triethylene glycol, are used, mono- and diesters can be formed; when polyhydric alcohols with three hydroxyl groups such as, for example, glycerin, are used, mono-, di-, and triesters can be formed; and when polyhydric alcohols with four hydroxyl groups such as, for example, pentaerythritol, are used, mono-, di-, tri, and tetraesters can be formed. In each case, the esterification reaction results in a UVCB (substance of unknown or variable composition, complex reaction products), which contains esters with a variable number of ester linkages formed by the reaction of the various resin acids with the alcohol.

In particular, rosin esters can be commercial or can be prepared. The esterification reaction of rosin with alcohols to obtain the esters that can be used is a reaction known to one skilled in the art and is widely described. Therefore, esterification is carried out by reacting carboxylic acids with an alcohol by means of a condensation reaction, producing an ester and water. This reaction is typically carried out at high temperatures, between 240 and 290°C, due to the strong structure of the carboxylic groups, obtaining a derivative with a lower acid number. The use of a catalyst is feasible to speed up the reaction and lower the temperature. Excess acid or alcohol, as well as removal of water from condensation, favors the yield of the reaction.

Moreover, esterification reaction can also be carried out with molten rosin. The amount of alcohol used in the reaction can vary depending on the rosin ester to be prepared. In some embodiments, rosin can be provided in excess to produce a rosin ester with a low degree of esterification. In other embodiments, alcohol can be provided in excess. The use of one type of alcohol or another will be responsible for the derivative rosin ester obtained having a higher or lower molecular weight and softening point and therefore having a specific physical state at room temperature.

In one embodiment of the invention, optionally in combination with one or more features of the various embodiments described above or below, rosin esters which are viscous liquids at room temperature (25°C) are obtainable by means of a method which comprises esterifying rosin or a salt thereof with an alcohol giving rise to viscous liquid esters. In a more particular embodiment, the reaction is carried out at a temperature from 240 to 290°C, more particularly at a temperature of about 250°C. In another particular embodiment, the alcohol is selected from the group consisting of (C₁-C₁₂)alcohol and polyethylene glycol, more particularly, the alcohol is a polyhydric (C₁-C₁₂)alcohol, and more particularly it is selected from the group consisting of methanol, diethylene glycol, and triethylene glycol.

In another embodiment of the invention, optionally in combination with one or more features of the various embodiments described above or below, rosin esters which are solid at room temperature (25°C) are obtainable by means of a method which comprises esterifying rosin or a salt thereof with an alcohol giving rise to solid esters. In a more particular embodiment, the reaction is carried out at a temperature from 240 to 290°C, more particularly at a temperature of about 250°C. In another particular embodiment, the alcohol is selected from the group consisting of (C₁-C₁₂)alcohol and polyethylene glycol, more particularly, the alcohol is a polyhydric (C₁-C₁₂)alcohol, and more particularly, the alcohol is selected from the group consisting of ethylene glycol, glycerin, trimethylolpropane, and pentaerythritol.

In another embodiment of the invention, optionally in combination with one or more features of the various embodiments described above or below, the rosin used for preparing the rosin ester is gum rosin (GR), which is obtainable by distillation with steam entrainment of the resin obtained by cutting the bark of a pine tree.
In another embodiment of the invention, optionally in combination with one or more features of the various embodiments described above or below, the rosin used for preparing the rosin ester is wood rosin (WR), which is obtainable by extraction from pine stumps or wood sawmill waste through treatment with organic solvents.

In another embodiment of the invention, optionally in combination with one or more features of the various embodiments described above or below, the rosin used for preparing the rosin ester is tall oil rosin (TOR), which is obtainable from the by-products of paper pulp production.

Depending on the desired penetration values for the binder of the invention, the amounts of each of the two types of resin esters can be varied. The binders of the invention can thus be prepared in a wide range of proportions.

In one embodiment of the invention, optionally in combination with one or more features of the various embodiments described above or below, the weight of a) (one or more conifer resins comprising one or more resin acid esters, or alternatively, one or more resin acid esters, which are viscous liquids), particularly the weight of a1) (one or more conifer resins comprising one or more resin acid esters which are viscous liquids), represents from 10 to 90% by weight of the total weight of the binder; more particularly from 20 to 90%; more particularly from 30 to 90%; and more particularly from 40 to 90%. In a more particular embodiment, the weight of a) represents about 20, 30, 45, 50, 55, 60, 65, 70, 75, 80, 85, or 90% by weight of the total weight of the binder.

In another embodiment of the invention, optionally in combination with one or more features of the various embodiments described above or below, the weight of b) (one or more conifer resins, or alternatively, one or more conifer resin components, which are solid), particularly the weight of b1) (one or more conifer resins comprising one or more resin acid esters which are solid), represents from 10 to 90%; more particularly from 10 to 50%. In a more particular embodiment, the weight of b) represents about 10, 15,17.5, 20, 25, 30, 35, 40, 45, or 50% by weight of the total weight of the binder.
In another embodiment of the invention, optionally in combination with one or more features of the various embodiments described above or below, the ratio by weight between a1) and b1) ranges from 90:10 to 20:40. More particularly, the ratio by weight is about 90:10, 80:20, 75:25, 70:15, 65:35, 65:17.5, 60:40, 60:20, 55:45, 50:50, 50:25, 30:35, or 20:40.

When the binder of the invention comprises a1) and b1), it can further comprise non-esterified rosin, simply referred to as rosin herein. This rosin can be unmodified (natural) or modified rosin, derived rosin, or multiple rosin as indicated above. Alternatively, the rosin can originate from a by-product containing same. In that sense, in one embodiment of the invention, optionally in combination with one or more features of the various embodiments described above or below, the binder comprises a1), b1), and also rosin, particularly natural rosin. More particularly, the weight of rosin is equal to or less than 50% of the total weight of the binder, more particularly it is from 15 to 40%. In a more particular embodiment, the weight of rosin is about 10, 15, 17.5, 20, 25, 30, 35, 40, 45, or 50% of the total weight of the binder.

In a more particular embodiment of the invention, optionally in combination with one or more features of the various embodiments described above or below, the ratio by weight between a1); and the sum of rosin and b1) ranges from 90:10 to 20:80. More particularly, the ratio by weight is about 90:10, 80:20, 75:25, 70:30, 65:35, 60:40, 55:45, 50:50, 30:70, or 20:80.

In another embodiment of the invention, optionally in combination with one or more features of the various embodiments described above or below, the binder comprises a mixture of a diethylene glycol ester of rosin, a glycerin ester of rosin, and optionally rosin.

In another embodiment of the invention, optionally in combination with one or more features of the various embodiments described above or below, the binder comprises a mixture of a triethylene glycol ester of rosin, a glycerin ester of rosin, and optionally rosin.

In another embodiment of the invention, optionally in combination with one or more features of the various embodiments described above or below, the binder of the invention lacks added polymers.

As mentioned above, the binders of the invention are suitable to be mixed with different proportions of aggregates, wherein these aggregates are usually previously classified by their size. The representation of this final composition formed by the aggregates from the point of view of particle size is known as a grading curve. Once transported, spread out in layers, and properly compacted, these compositions obtained from aggregate-binder mixtures form the so-called pavements, i.e., that smooth, hard, and resistant layer with which the ground is covered so that it is firm, flat, and capable of supporting loads without deforming.

In that sense, another aspect of the invention relates to a composition similar to an asphalt composition comprising a mixture of the binder defined above and an aggregate composition. All the final aggregate-binder compositions that can be used with the binder defined herein are at least the same as those currently obtained when penetration-grade bitumens are used, with the most widely used types of hot bituminous mixtures being those known as: bituminous concrete (AC), ultrafine bituminous mixtures (AUTL), drainage bituminous mixtures (PA), bituminous mastics (AM), mixtures for thin layers (BBTM), and SA, HRA, SMA type mixtures. However, other aggregate-binder compositions or variations are possible.

The grading ranges in which the obtained grading curve can fit, as well as the types of aggregates that can be used, are both widely known by one skilled in the art.

By way of summary and to facilitate understanding of the invention, aggregates are usually commercially pre-classified in different gradings or size ranges. Colloquially they are known as fillers, sand, gravel, gravel chippings, ballast, terminologies that cover aggregates in that order from smallest to largest size. A more formal classification defines coarse aggregate as the aggregate that is retained on a 2 mm sieve, fine aggregate as the aggregate sifted through a 2 mm sieve and retained in a 0.063 mm sieve, and mineral powder or filler as the aggregate sifted through a 0.063 mm sieve.

The following can be found depending on origin: natural aggregates such as those obtained from geological deposits such as gravel pits or quarries, including among them, for example, limestone, siliceous, granite, ophite, quartzite, porphyry, basalt, dolomitic, trachyte, phonolite. Artificial aggregates such as those resulting from industrial processes that involve physical-chemical or another type of modifications such as, for example, iron and steel aggregates obtained from blast furnace slag. Recycled aggregates such as those obtained from an inorganic treatment of materials that have previously been used in construction.

Fillers or mineral powder are defined as the aggregate most of which passes through a 0.063 mm sieve. They can be obtained by suction and direct filtering in mixture production plants when the aggregates are heated prior to mixing them with the binder, and are known as recovery fillers. Commercial fillers, known as added powder, can also be found. They are usually produced directly by crushing and classification by fineness in aggregate transformation centers such as companies that produce calcium carbonate, or by synthesis such as cement, lime, lime hydroxide, or resulting mixtures.

In one embodiment, optionally in combination with one or more features of the various embodiments described above or below, the weight of the binder represents from 3 to 10% of the weight of the aggregate-binder composition, more particularly from 4 to 7% of the weight of the aggregate-binder composition.

In one embodiment, optionally in combination with one or more features of the various embodiments described above or below, the weight of the aggregates represents from 90 to 97% of the weight of the aggregate-binder composition, more particularly from 93 to 96% of the weight of the aggregate-binder composition.

The compositions including the binders of the invention are advantageous over conventional bituminous mixtures in that they have a more or less dark honey-colored tonality depending on the esters used, which makes them susceptible to being colored, if necessary, by a wide variety of pigments, a widely known technique. In that sense, the aggregate-binder compositions can also contain pigments.

Furthermore, other products such as antioxidants, UV stabilizers, adhesion promoters, fibers, polymers, to improve any of their properties, if necessary.

In that sense, in one embodiment, optionally in combination with one or more features of the various embodiments described above or below, the aggregate-binder composition further comprises additives, more particularly additives selected from antioxidants, UV stabilizers, fibers, adhesion promoters, polymers, pigments, and mixtures thereof.

As described above, the binders of the invention have wide penetration ranges which are similar and are able to fit to the most common types of commercial petroleum bitumens, the types of which vary from 15/25 to 250/330, with there being up to types 650/900 for more particular applications. This invention shows that during the production of the binder, the final penetration obtained and required can be controlled and adjusted simply and by means of variations in the added proportions or ratios between the products having a solid state at room temperature and the products having a liquid state at room temperature, thereby allowing an easy and controllable real production.

The inventive method allows obtaining binders and deciding, for each application, the production of a binder within a given penetration range, with the different penetration ranges and types of bitumen commonly used depending on their final application serving as a guide.

The penetration test referred to in the present invention is the same one used to classify petroleum bitumens (UNE-EN 1426). This test allows determining determine the relative consistency or hardness of the binders and constitutes the main differential characteristic thereof. It is possible to characterize the binders in a more complete manner, some of these tests consist of obtaining the softening point according to the ring and ball method and determining the Fraass brittle point, which show the thermal susceptibility of the binder.

Most of the world's production of penetration-grade bitumens is used for paving by means of hot bituminous mixtures and these usually use, in most cases, bitumens with penetration ranges comprised from 15 to 70. In waterproofing and emulsion production, although bitumens in the aforementioned ranges are also used, a second set of bitumens with penetrations comprised from 70 to 150 and even higher is also important. Due to this greater volume and the great importance of the paving sector, the present invention has focused particularly on showing binders in these penetration ranges by way of example, and due to their greater importance, without limiting, as it is also shown that binders with penetrations from 5 to 360 and up to values of 900 can be obtained.

In that sense, in one embodiment of the invention, optionally in combination with one or more features of the various embodiments described above or below, the binder shows a penetration value analyzed according to the UNE-EN 1426 standard and measured at 25°C, 100 g, 5 s, from 5 to greater than 360. In particular, values comprised from 10 to 100, and in a more particular embodiment values comprised from 15 to 70, for making conventional pavements similar to bituminous asphalts.

As mentioned above, the great importance of hot bituminous mixtures in the paving or asphalt sector, and accordingly the actual importance of showing that the binder produced herein can be used for said applications, makes it important to establish an easy comparative mechanism that is known to any mixture manufacturer. In the hot mixture paving sector, the stability of the aggregate-binder compositions can be measured according to the UNE-EN 12697-34 standard, commonly called the Marshall test, where cylindrical specimens having specific aggregate compositions are prepared to obtain a final grading envelope where, once the compositions are mixed with an amount of binder to be tested, they are compacted according to an established method, conditioned at 60°C for one hour and subsequently placed inside a clamp in a press where they are caused to break by means of applying a constant load at a controlled speed.

The aggregate-binder compositions can also be characterized by means of a water sensitivity test according to UNE-EN 12697-12, where the loss of cohesion caused by the action of water in the compacted mixtures is determined and it allows checking the aggregate-binder adhesiveness. The basics are simple: a set of cylindrical specimens having specific aggregate compositions is prepared to obtain a final grading envelope and mixed with a specific amount of binder, this set, once compacted according to standard conditions, is divided into two subsets of the same size and are conditioned. One subset is kept dry at room temperature, while the other subset is saturated and stored in water at a high temperature of 40°C for 48-72 hours, after conditioning, the indirect tensile strength of each of the subsets is determined.

They are widely used and simple techniques that, by comparison, can be used to assess the applicability and/or similarity of the aggregate-binder compositions of the invention with conventional hot bituminous mixtures used in paving.

In one embodiment of the invention, optionally in combination with one or more features of the various embodiments described above or below, the composition shows Marshall stability equal to or greater than 7.5 KN, particularly values comprised from 7.5 to 25 KN for use thereof in paving, measured according to the UNE-EN 12697-34 standard.

In another embodiment of the invention, optionally in combination with one or more features of the various embodiments described above or below, the composition shows water sensitivity equal to or greater than 75%, more particularly from 80 to 95%, measured according to the UNE-EN 12697-12 standard.

The invention shows that the combination of different products in different proportions will lead to obtaining binders with different penetration values and ranges, and therefore susceptible to being used in the construction sector in different applications and preparation of materials such as: paving, coatings, surface treatments, gaskets, putties, paints, precursors for preparing emulsions and treatments and materials for soundproofing and waterproofing both in construction and in other industrial sectors such as the automotive sector, for example. In that sense, another aspect of the invention refers to the use of the binder or of the composition defined above in paving, coatings, surface treatments, gaskets, putties, paints, and precursors for preparing emulsions and treatments and materials for soundproofing and waterproofing.

In each of the applications, and in each of the materials prepared using this binder, different penetrations ranges may be required, as described above.

In that sense, the present invention also relates to the use, as a binder in the construction, waterproofing, and soundproofing sector, of a combination comprising:
a) one or more conifer resins comprising one or more resin acid esters, having individually or after being mixed, a viscous liquid state at 25°C and 1013 hPa, or alternatively, one or more resin acid esters of conifer resin, having individually or after being mixed, a viscous liquid state at 25°C and 1013 hPa; and
b) one or more conifer resins, having individually or after being mixed, a solid state at 25°C and 1013 hPa, or alternatively, one or more conifer resin components, having individually or after being mixed, a solid state at 25°C and 1013 hPa.

The use of the preceding combination comprising a) and b) as a binder in the construction, waterproofing, and soundproofing, and/or thermoplastic sector is also part of the invention.

The binder of the invention can be prepared by means of very simple and well-known methods, which is advantageous when applied industrially.

In that sense, the binder of the invention can be prepared directly by means of mixing the resins or their components. It is also possible to esterify various resin acid esters, or alternatively the resins, to obtain the desired binder.

For the preparation of said binder, continuous or discontinuous systems for mixing previously obtained or commercial esters, up to a single reactor system where several rosin resin acids or rosin are esterified with a mixture of alcohols can be used.

Therefore, another aspect of the invention relates to a method for preparing the binder defined above, which comprises:
i) providing a) one or more conifer resins comprising one or more resin acid esters, having individually or after being mixed, a viscous liquid state at 25°C and 1013 hPa, or alternatively, one or more resin acid esters of conifer resin, having individually or after being mixed, a viscous liquid state at 25°C and 1013 hPa; and
   b) one or more conifer resins, having individually or after being mixed, a solid state at 25°C and 1013 hPa, or alternatively, one or more conifer resin components, having individually or after being mixed, a solid state at 25°C and 1013 hPa, and
ii) mixing the components of step i) at a temperature such that it allows completely melting all the components.

The mixing temperature must be at least that which allows the resin or resin mixture or the components thereof, which are solid at room temperature of 25°C, to melt completely, an easy and homogeneous mixing of all the products will thus be facilitated. Generally, temperature ranges comprised from 100 to 200°C will not only allow all the resins to be melted, but will also facilitate mixing, since liquids with low viscosities are already observed.

If the starting products, for example, resin acid esters or rosin esters and optionally rosin, are previously heated so that their phases are liquid, the process for obtaining the final binder is a simple continuous or discontinuous process: the possible esters, and optionally rosin, will be added from their respective tanks into a reactor-mixer where they will be mixed, at a controlled temperature (generally a temperature within the interval of 100-200°C, with 150-170°C being the commonly used temperature) and with gentle stirring, for example in an interval of 1-2 hours, which is more than enough time to homogenize the mixture, and then the final product will be transferred to a final product storage tank, to be supplied hot or to taken to pelleting or granulation using known or available techniques.

If the starting products, for example, resin acid esters or rosin esters and optionally rosin, are added at room temperature, the process will be a discontinuous process, a longer time will be necessary. The products can be added in any order. For example, the rosin-derived ester with a viscous liquid appearance can be added first, then a rosin ester, and finally the rosin when it is present, in order to take advantage of the fact that the viscous product facilitates the melting of the other products. Once all the products have melted, gentle stirring can be applied to ensure mixing and homogenization for 1-2 hours, for example. The whole process can take between 4-24 hours depending on the final amount to be prepared and two temperatures for gradual and controlled heating should be used: in a first step between 60°C-120°C will serve to melt the solid products, and in a second step, once they have melted, a higher temperature between 100-200°C is applied, with 150-170°C being the most common temperature, enough to reduce viscosity and to thereby facilitate mixing and homogenization process, once the binder is obtained, it can be transferred to storage to be supplied hot or to be taken to pelleting or granulation using known or available techniques.

The application of two temperatures can be replaced by the use of a temperature ramp where the desired final temperature is achieved in a set time. It is feasible to use a single temperature as in the other processes, but it is a guarantee and safety protocol to be taken into account. In fact, before applying stirring, it should be ensured that the resin or resin components that are solid at room temperature have melted. This fact indicates that it seems unnecessary to apply so much initial temperature, so in the first step, only a temperature capable of melting the components is required, subsequently applying mechanical stirring that will allow the temperature inside the reactor as a whole to be homogenized. Lastly, a second step at a higher temperature to minimize the viscosity of the whole so to facilitate better and more homogeneous mixing.

It is known that the heating systems in reactors can be of several types, some of these heating systems can be set at a high temperature in the initial stages, forced by the temperature probes, especially when there are solid and liquid products together in an initial stage. This initial excess heat provided by these heating elements could, due to excessive exposure over time, greatly degrade the resins, or cause the excessive evaporation of the most volatile elements that they may contain and over time coke the material around these heating systems. The use of temperature rise ramps, or if this is not possible, the use of temperature stages, allows minimizing these processes or being a preventive means.

Alternatively, the binder of the invention can be obtained by means of a single-step preparation. The acids present in the natural resin, modified resin, derived resin, multiple resin, or mixtures thereof will be completely or partially esterified with one or more alcohols, but one of the following conditions mentioned as a and b must be met:
a) If one or more alcohols are used and the esters obtained from the acids present in the isolated resins all have a viscous liquid physical state at room temperature, the condition of a proportion of the resin having to remain unesterified must be met. In this way only a part of the acids of the initial resin(s) will be esterified. The different esterified proportions obtained and the remaining unreacted proportions will be mixed. It is the competition or final ratio of resins in solid physical state at room temperature with the resin ester or esters in liquid physical state at room temperature which, once mixed, lead to a binder in the required penetration ranges.
b) If several alcohols are used, at least one of these alcohols during esterification will lead to the formation of a resin ester that is a viscous liquid at room temperature and at least another of these alcohols during esterification will lead to the formation of a resin ester that is solid at room temperature.

It is the competition or final ratio of resin esters, unreacted resins, both solid at room temperature, with the resin ester or esters in liquid physical state at room temperature which, once mixed, lead to a binder in the required penetration ranges.

In any case, it is the adjustment of the amount of reagent or reagents, alcohol or alcohols, and the adjustments of reaction parameters, which serve to control the penetration ranges to be obtained. The final binder is the result of the homogeneous mixing of the different esters obtained and unreacted resins, which will give a product with a higher or lower penetration value depending on the different products mixed.

When reference is made in the present invention to resin acid esters, particularly rosin esters with an alcohol, being viscous liquids "when isolated", it means that if they were only esterified with that alcohol they would be viscous liquids at room temperature.

When the invention refers to rosin acid esters, and particularly rosin esters with an alcohol, which are solid "when isolated", it means that if they were only esterified with that alcohol they would be solid.

It is also part of the invention the binder obtainable by means of the method which comprises:
i) providing a) one or more conifer resins comprising one or more resin acid esters, having individually or after being mixed, a viscous liquid state at 25°C and 1013 hPa, or alternatively, one or more resin acid esters of conifer resin, having individually or after being mixed, a viscous liquid state at 25°C and 1013 hPa; and
   b) one or more conifer resins, having individually or after being mixed, a solid state at 25°C and 1013 hPa, or alternatively, one or more conifer resin components, having individually or after being mixed, a solid state at 25°C and 1013 hPa, and
ii) mixing the components of step i) at a temperature such that it allows completely melting all the components.

For the purposes of the invention, the expressions "obtainable", "obtained" and equivalent expressions are used interchangeably, and in any case the expression "obtainable" includes the expression "obtained".

Moreover, the compositions of the binders of the invention mixed with the aggregates simulating a bituminous mixture can be prepared by hot mixing the binders with the aggregates and optionally other additives, with the chosen temperature being that at which the binder envelopes and covers the aggregate effectively, depending on the consistency of the binder, this temperature can vary from 120 to 200°C, particularly temperatures between 160-180°C have been used.

Throughout the description and the claims, the word "comprises" and its variants do not intend to exclude other technical features, additives, components or steps. Furthermore, the word "comprises" includes the case of "consists of'. For those skilled in the art, other objects, advantages and features of the invention may be partially deduced from both the description and the embodiment of the invention. The following examples are provided by way of illustration and are not intended to limit the present invention. Furthermore, the present invention covers all possible combinations of particular and preferred embodiments indicated herein.

### EXAMPLES

### Binders

Different binders were prepared by means of the following routine: the different constituents were deposited in a metal container that was not closed, this mixture was heated for one hour so that the products melted, and the temperature of the mixture was homogenized at 150-170°C. It was then kept at the same temperature with gentle stirring for another hour, however, preparations with sporadic stirring showed similar results in the tests performed, due to their easy miscibility.

Once the binders were prepared, they were used to directly fill the reservoir while still hot. Thereafter and once cooled to the standard temperature of 25°C or 15°C, the penetration test was performed by measuring the distance in tenths of a millimeter that a needle with a load of 100 grams penetrates the mixture vertically for 5 seconds. The remaining binder can be allowed to cool until the need to use it to prepare aggregate-binder mixtures. When having to use the remaining binder, it will be heated to melt it again at the temperatures indicated in the experimental design.

The commercial raw materials were supplied by Industrial Resinera Valcan SA. The following were used as esters with viscous liquid presentation at room temperature:
- Commercial diethylene glycol ester of rosin. CAS 68153-38-8, melting point: 8.9°C, and acid number obtained: 14 mg KOH/g.
- Commercial triethylene glycol ester of rosin. CAS 8050-25-7, melting point: <-20 and acid number obtained of 13 mg KOH/g.

The following were used as esters with solid presentation at room temperature:
- Commercial glycerin ester. CAS 8050-31-5, ring-ball softening/melting point obtained: 90-94°C, acidity value obtained of 7 mg KOH/g.
- Two glycerin esters obtained internally by varying reaction conditions for the purpose of hindering esterification and thereby obtaining lower degrees of acidity number, and they are named herein as:

Prepared glycerin ester A. Ring-ball softening/melting point of 84-88°C. Acid value of 60 mg KOH/g.
Prepared glycerin ester B. Ring-ball softening/melting point of 78-82°C. Acid number obtained of 120 mg KOH/g.

The obtained data of acid number show that the esterification product prepared glycerin ester B has a lower degree of esterification than prepared glycerin ester A and this in turn has a lower degree of esterification than the commercial glycerin ester used.

In some examples, natural rosin was also used as a direct natural resin sample, which is solid at room temperature. CAS 8050-09-7. Ring-ball softening/melting point: 68-85°C. Acid number between 155-180 mg KOH/g

The following table shows the quantitative compositions of the binders obtained. In the case of glycerin, the commercial ester was used in all cases except when otherwise indicated:

| **Example** | **Triethylene glycol ester (% w/w)** | **Diethylene glycol ester (% w/w)** | **Glycerin ester (% w/w)** | **Natural rosin (% w/w)** |
|---|---|---|---|---|
| 1 | 65 | 0 | 17.5 | 17.5 |
| 2 | 60 | 0 | 20 | 20 |
| 3 | 55 | 0 | 45 | 0 |
| 4 | 50 | 0 | 25 | 25 |
| 5 | 50 | 0 | 50 | 0 |
| 6 | 0 | 90 | 10 | 0 |
| 7 | 0 | 80 | 20 | 0 |
| 8 | 0 | 70 | 15* | 15 |
| 9 | 0 | 75 | 25 | 0 |
| 10 | 30 | 0 | 35* | 35 |
| 11 | 0 | 60 | 20** | 20 |
| 12 | 0 | 60 | 20* | 20 |
| 13 | 0 | 70 | 15 | 15 |
| 14 | 0 | 65 | 35 | 0 |
| 15 | 0 | 50 | 25** | 25 |
| 16 | 0 | 60 | 20 | 20 |
| 17 | 20 | 0 | 40* | 40 |
| 18 | 0 | 60 | 40 | 0 |

| | | | | |
|---|---|---|---|---|
| ** Prepared glycerol ester A* ** *Prepared glycerol ester B* | | | | |

### Penetration test

As mentioned above, the penetration test is usually used to specify the different grades of bitumen on the market. In Europe, bitumen and bituminous binders for paving are usually classified into two large groups, one for bitumens between 20 and 330 and another for bitumens between 250 and 900. The first group proposes the following types of bitumen: 20/30, 30/45, 35/50, 40/60, 50/70, 70/100, 100/150, 160/220, and 250/330 which show a penetration range measured at 25°C, 100 g, 5 s that corresponds exactly to these respectively numbered ranges. The second group comprises the following types of bitumen: 250/330, 330/430, 500/650, and 650/900, in this case they show a penetration range measured at 15°C, 100 g, 5 s that corresponds to 70 /130, 90/170, 140/260, 180/360, respectively.

Therefore, for the binders shown in the examples, the penetration test was carried out following the guidelines of the UNE-EN 1426 standard. The objective is to determine the relative hardness or consistency thereof by measuring the distance in tenths of millimeters that a standard needle vertically penetrates a binder sample under specific conditions of temperature, load, and time: the applied load is 100 g, the application time is 5 seconds, and the temperature is 25°C for all the examples, and in which limit or higher values of very soft penetration have been obtained, the penetration value has also been determined at a temperature of 15°C.

Four penetration measurements were taken from the same sample within the same reservoir and instead of giving a mean value, the values have been grouped with a maximum jump of 5 points and a small range is thus shown. The following table shows the penetration values obtained with the examples of different prepared binders and a possible fit within the different types of bitumens.

| **Example** | **Penetration values at 25°C, 100 g, 5 s (0.1 mm)** | **Penetration values at 15°C, 100 g, 5 s (0.1 mm)** |
|---|---|---|
| 1 | >360 | 150-155 |
| 2 | 290-295 | 105-110 |
| 3 | 185-190 | |
| 4 | 150-155 | |
| 5 | 135-140 | |
| 6 | 125-130 | |
| 7 | 70-75 | |
| 8 | 55-60 | |
| 9 | 50-55 | |
| 10 | 40-45 | |
| 11 | 40-45 | |
| 12 | 35-40 | |
| 13 | 35-40 | |
| 14 | 30-35 | |
| 15 | 25-30 | |
| 16 | 20-25 | |
| 17 | 15-20 | |
| 18 | 15-20 | |

Example 1 shows a very soft binder the penetration of which at 25°C can no longer be measured because it exceeds 360 x 0.1 mm, the maximum resolution of the penetrometer used. In this case, by similarity to the types of bitumens and the aforementioned classification method, the penetration test was performed in the same manner described, but using a lower temperature of 15°C. This has also been performed for the binder of Example 2.

By similarity to the aforementioned bitumen classification, Example 1 could be a type of binder comprised in the 330/430 type and Example 2 in the 250/330 type.

Indeed, all the binders shown in the examples of the invention could be grouped into similar types following the same classification of bitumen or bituminous binder types.

This invention shows that the described preparation in which different proportions of resin and resin derivatives that are solid at room temperature are mixed with liquid resin ester at room temperature allows obtaining a binder with a wide range of penetration values.

Simply by varying the proportion of added products, there are obtained different binders that allow covering all the ranges that can be found commercially and by similarity to penetration-grade bitumens, from softer binders with higher penetration ranges, to harder binders with lower penetration ranges.

As described above and shown in the preceding table, it is the competition and therefore the proportion of each product used, or in other words, the ratio between solid and liquid products, which allows obtaining higher or lower penetration values.

Among the liquid esters at room temperature used in these examples, it can be seen that triethylene glycol ester of rosin melts at temperatures below 0°C and shows significantly lower viscosity at room temperature of 25°C when compared to diethylene glycol ester of rosin which requires temperatures above 0°C to be melted and shows a lower viscosity at room temperature of 25°C.

Among the rosin esters that are solid at room temperature shown in these examples, it can be seen that when glycerin esters with a higher degree of esterification are used, reflected by having a lower acid number, a lower proportion of this ester will be required in the final binder mixture to obtain similar penetrations with respect to when glycerin esters with a low degree of esterification have been used.

### Example of binder compositions with aggregates

Due to the great importance of paving with hot bituminous mixtures in the construction sector, several of the obtained binders were tested, focusing on the penetration ranges that would fit within the ranges of the most widely used commercial penetration-grade bitumens, which would range from a penetration of 15/20 to a maximum penetration of 50/70.

To check the operation of the binders presented in the examples, aggregate-binder mixtures simulating hot bituminous mixtures of the bituminous concrete type, i.e., Asphalt concrete (AC), were prepared. A simple definition thereof would be the combination of asphalt bitumen, aggregates with continuous grading, mineral powder and, possibly, additives, such that all the aggregate particles are covered by a homogeneous binder film, the production and commissioning process of which must be performed at a temperature much higher than room temperature.

It was resorted directly to preparing specimens by means of combining a bituminous concrete-type grading envelope with a defined grading AC11 in which the penetration-grade bitumen has been replaced with the binder of the invention, different fractions of aggregates have been mixed with the binders prepared in Examples 6 to 16, and subsequently the UNE-EN 12697-34 and UNE-EN 12697-12 tests were performed to verify the initial behavior thereof as a paving mixture.

This dense and continuous type AC11 grading curve involves aggregates having maximum sizes between 10 and 12 mm for preparation. For these examples, standard commercial aggregates for use in bituminous mixtures and surface treatments of roads, airports, and other paved areas, were used. As a larger caliber aggregate, an aggregate defined by having a grading between 4 to 10 mm, of granitic nature, used for wearing courses and with fragmentation resistance values or Los Angeles coefficient of LA:20, has been used. As sand, an aggregate defined by having a grading comprised between 0 and 4 mm, of limestone nature, and with SE4 sand equivalent values: 70 has been used.

Due to the fact that the grading composition, content or proportion of binder, and nature of the aggregates used influence the attainment of higher or lower stability and sensitivity values, samples were prepared and tested using a commercial penetration-grade bitumen with CE marking of the B35/50 and B50/70 type as binder, these values will serve as a standard and demonstrate by comparison the applicability thereof as aggregate-binder mixtures for use in paving.

Traditionally, in conventional AC bituminous concrete-type mixtures, obtaining values between 7.5 and 8.0 KN in the Marshall stability test, together with values >75% in the water sensitivity test, were acceptable values for use in road paving, with less intense heavy traffic categories.

However, in regulatory documents, based on the type of heavy traffic, measured by the mean daily intensity of heavy vehicles (MDIh), values were established for these different traffic categories, requiring higher stability values when the daily intensity of heavy vehicles is higher, requiring values greater than 15 KN and 80-85% for stability and sensitivity, respectively.

An aggregate composition obtained from mixing 40% limestone sand 0/4 and 60% of coarse granitic aggregate 4/10, previously stirred and dried in the oven at 100°C to eliminate moisture for 24 hours, was prepared. Subsequently, it was sieved with the different UNE sieves: with a sieve opening of 16, 11.2, 5.6, 2, 0.5, 0.063 mm, bottom, keeping the materials retained in each sieve in separate trays. To prepare each specimen or prepare each group of specimens in order to perform the Marshall test UNE-EN 12697-34 or the water sensitivity test UNE-EN 12697-12, all materials including the obtained binder were heated at temperatures of 160-180°C and mixed according to the following recipe in which each of the different constituents is indicated.

The entire process of prior sieving and separation of materials retained in each sieve was performed so that all the specimens are very similar to each other, and so that grading distribution can be performed in the most reproducible way, and so that the results are only influenced by the binder used.

The recipe used for each specimen of AC11 binder-aggregate mixture is as follows:
material retained on sieve of 11.2 mm = 59.1 g
material retained on sieve of 5.6 mm = 342.9 g
material retained on sieve of 2.0 mm = 313.4 g
material retained on sieve of 0.5 mm = 236.5 g
material retained on sieve of 0.063 mm = 149.6 g
material retained on sieve of <0.063 mm (bottom) = 40.5 g
Calcium carbonate of 95% purity = 40.5 g
Binder or commercial bitumen: 67.5 g

Once the mixture was made, the material was placed inside a mold for subsequent compaction when the temperature of the mixture reached 145-150°C, using an impact compactor and applying 75 blows per side in the case of Marshall stability specimens and 50 blows per side in the case of water sensitivity specimens. The tests on specimens of aggregate-binder mixtures obtained the following density, Marshall stability, and water sensitivity values:

| **Tested composition AC11 with binder** | **Apparent density (g/cm³)** | **Marshall stability (KN)** | **Water sensitivity (%)** |
|---|---|---|---|
| Binder of Example 8 | 2471 | 11.6 | 87 |
| Binder of Example 9 | 2435 | 12.5 | 88 |
| Binder of Example 10 | 2461 | 15.8 | 85 |
| Binder of Example 11 | 2464 | 14.1 | 88 |
| Binder of Example 12 | 2457 | 12.4 | 91 |
| Binder of Example 13 | 2466 | 12.9 | 91 |
| Binder of Example 14 | 2443 | 13.4 | 85 |
| Binder of Example 15 | 2459 | 19.3 | 83 |
| Binder of Example 16 | 2470 | 15.6 | 86 |
| Binder of Example 17 | 2454 | 49.1 | 80 |
| Binder of Example 18 | 2450 | 17.3 | 83 |
| Commercial bitumen B50/70 | 2413 | 11.2 | 84 |
| Commercial bitumen B35/50 | 2396 | 13.3 | 83 |

The results obtained in the AC11 mixtures prepared with the binders of this invention show values similar or higher than those achieved with commercial bitumens, this fact demonstrates that these formulations can be used with criteria similar to commercial penetration-grade bitumens for paving.

In the example of binder 17, a very high Marshall stability value is shown. On the one hand, it is in line with obtaining high resistances when the binders have a high hardness or low penetration value, by similarity, the conventional AC mixtures made with petroleum bitumens with a low penetration of 10/20 or 15/25 and used as base layers and having grading performed with larger caliber aggregates lead to the commonly called high modulus mixtures, mixtures which show stability values close to 20 KN. This greater stability provides greater stress absorption capacity and greater resistance to fatigue. However, by similarity to petroleum-derived penetration-grade bitumens, generally a low penetration point binder involves a higher softening temperature, but it can also prove to be more brittle at temperatures below zero when compared to a softer bitumen having a higher penetration value. In summary, a hard bitumen is more rigid and when applied to a pavement can provide greater resistance to support loads, but this greater rigidity can also lead to it being less flexible and therefore more brittle at low temperatures.

If a binder for paving with these penetration ranges is required, the components and/or proportions can be varied. If a binder for a pavement using these components or constituents is simply required, a higher penetration will be sought to ensure a binder with more flexible behavior at low temperatures, ultimately, with greater ductility.

The examples of binders shown in the invention, their penetration values, and the values shown in aggregate-binder specimens show that:
Depending on the alcohol used for the esterification of the acids present in the conifer resin, particularly in the esterification of the rosin resin, esters with liquid or solid physical states at room temperature can be obtained.

Hot mixing with different proportions of conifer resin esters, particularly rosin, which are liquid at room temperature, with different proportions of conifer resins and esters, particularly rosin, which are solid at room temperature, allows obtaining binders with a wide range of penetrations and similar to penetration-grade bitumens.

The obtained binder penetration ranges can be regulated simply by varying the proportion or ratio between constituent fractions that are liquid and solid at room temperature.

Accordingly, depending on the ester used, on the chosen alcohol and its degree of esterification, binders can be prepared that, once used in paving mixtures, allow higher or lower stability and sensitivity values. This fact means that binders with better paving performance can be obtained by means of selecting esters and/or resins.

### CITATION LIST

- ES2079265
- ES2274732
- UNE-EN 1426
- UNE-EN 12697-34
- UNE-EN 12697-12

## Claims

1. A binder for the construction, waterproofing, and soundproofing sector, **characterized in that** it comprises:
a) one or more conifer resins comprising one or more resin acid esters, having individually or after being mixed, a viscous liquid state at 25°C and 1013 hPa, or alternatively, one or more resin acid esters of conifer resin, having individually or after being mixed, a viscous liquid state at 25°C and 1013 hPa; and
b) one or more conifer resins, having individually or after being mixed, a solid state at 25°C and 1013 hPa, or alternatively, one or more conifer resin components, having individually or after being mixed, a solid state at 25°C and 1013 hPa.

2. The binder according to claim 1, wherein the conifer resins b) comprise one or more resin acid esters, and the conifer resin components are one or more resin acid esters.

3. The binder according to any of the preceding claims, **characterized in that** it comprises:
a) one or more conifer resins comprising one or more resin acid esters, having individually or after being mixed, a viscous liquid state at 25°C and 1013 hPa; and
b) one or more conifer resins comprising one or more resin acid esters, having individually or after being mixed, a solid state at 25°C and 1013 hPa.

4. The binder according to any of the preceding claims, wherein the conifer resin is rosin.

5. The binder according to any of the preceding claims, wherein the resin acids are selected from the group consisting of abietic acid, neoabietic acid, dehydroabietic acid, dihydroabietic acid, pimaric acid, levopimaric acid, isopimaric acid, sandopimaric acid, and palustric acid.

6. The binder according to any of the preceding claims, in the absence of resins derived from fossil resources.

7. The binder according to any of the preceding claims, wherein the resin acid esters are alcohol esters selected independently from the group consisting of a (C₁-C₁₂)alcohol and polyethylene glycol.

8. The binder according to any of claims 2-7, wherein the resin acid esters having a viscous liquid state are alcohol esters selected from the group consisting of methanol, diethylene glycol, and triethylene glycol.

9. The binder according to any of the preceding claims, wherein the resin acid esters having a solid state are alcohol esters selected from the group consisting of ethylene glycol, glycerin, trimethylolpropane, and pentaerythritol.

10. The binder according to any of the preceding claims, wherein a) represents from 10 to 90% by weight of the total weight of the binder, and b) represents from 10 to 90% by weight of the total weight of the binder.

11. The binder according to any of claims 2-10, where the binder further comprises rosin.

12. The binder according to claim 11, wherein the weight of rosin is equal to or less than 50% of the total weight of the binder.

13. The binder according to claim 1, which is selected from the group consisting of:
i) a binder comprising a mixture of a diethylene glycol ester of rosin, a glycerin ester of rosin, and optionally rosin, and
ii) a binder comprising a mixture of a triethylene glycol ester of rosin, a glycerin ester of rosin, and optionally rosin.

14. The binder according to any of claims 1-13, which shows a penetration value from 5 to values above 360 measured at 25°C, 100 g, 5 s according to the UNE-EN 1426 standard.

15. A composition comprising a mixture of the binder defined in any of claims 1 to 14 and an aggregate composition.

16. A method for preparing the binder defined in any of the preceding claims which comprises:
i) providing a) one or more conifer resins comprising one or more resin acid esters, having individually or after being mixed, a viscous liquid state at 25°C and 1013 hPa, or alternatively, one or more resin acid esters of conifer resin, having individually or after being mixed, a viscous liquid state at 25°C and 1013 hPa; and
b) one or more conifer resins, having individually or after being mixed, a solid state at 25°C and 1013 hPa, or alternatively, one or more conifer resin components, having individually or after being mixed, a solid state at 25°C and 1013 hPa, and
ii) mixing the components of step i) at a temperature such that it allows completely melting all the components.

17. Use of the binder defined in any of claims 1-14 or of the composition defined in claim 15, in paving, coatings, surface treatments, gaskets, putties, paints, and precursors for preparing emulsions and treatments and materials for soundproofing and waterproofing.
